(19) Europäisches Patentamt
European Patent Office
Office européen des brevets

(11) Publication number: 0 311 311 A2

# (12) EUROPEAN PATENT APPLICATION

(21) Application number: 88309084.7

(22) Date of filing: 30.09.88

(51) Int. Cl.[4]: C08L 23/04, C08L 33/04, C08L 33/20, //(C08L23/04, 33:04),(C08L23/04,33:20)

(30) Priority: 09.10.87 US 107125
09.10.87 US 107324

(43) Date of publication of application: 12.04.89 Bulletin 89/15

(84) Designated Contracting States: BE DE FR GB IT NL

(71) Applicant: MOBIL OIL CORPORATION
150 East 42nd Street
New York New York 10017(US)

(72) Inventor: Dobreski, David Vincent
99 Country Downs Circle
Fairport New York 14450(US)
Inventor: Donaldson, Jack Jo
304 Yarmouth Road
Rochester New York 14610(US)

(74) Representative: Colmer, Stephen Gary
Mobil Court 3 Clements Inn
London WC2A 2EB(GB)

## (54) Films of blends of linear ethylene polymers and acrylic or acrylonitrilic polymers.

(57) The present invention relates to a film comprising a low density linear ethylene copolymer of ethylene and a higher olefin and up to 10 percent by weight of the total composition of an acrylic or acrylonitrilic polymer.

EP 0 311 311 A2

## FILMS OF BLENDS OF LINEAR ETHYLENE POLYMERS AND ACRYLIC OR ACRYLONITRILIC POLYMERS

This invention relates to films and more particularly to films such as blown films, cast films and the like, prepared from linear ethylene polymers and small amounts of acrylic or acrylonitrilic polymers.

Linear low and medium density polyethylene copolymers (LLDPE), and linear high density polythylene are known materials which are widely commercially available. LLDPE is also described in U.S. Patent No. 4,076,698. A commercially important use of LLDPE is in films which are conventionally prepared by blown film extrusion. Such films have generally good properties but often exhibit undesirably low stiffness for some uses and have marginal machine direction (MD) tear characteristics.

In accordance with U.S. Patent No. 4,579,912, MD tear can be improved by blending LLDPE with aromatic polymers such as polystyrene or poly(para-methylstyrene). Furthermore, the stiffness of LLDPE is improved without loss of MD tear. Moreover, U.S. Patent 4,156,703 teaches the improvement of processability in polyethylenes such as high density polyethylenes by blending therewith an acrylic polymer.

The present invention also relates to improved LLDPE blends and a method for preparing improved films, preferably blown films, made therefrom.

In one aspect, this invention relates to films comprising blends of from 90 to 99 weight percent linear ethylene polymers and small amounts, for example, from about 1 to about 10 weight percent, preferably from 3 to 5 weight percent, of an acrylic or acrylonitrilic polymer. The acrylic polymer may be a homopolymer or copolymer derived from one or more monomers having the general formula:

$$CH_2=\overset{R}{\overset{|}{C}}-\overset{O}{\overset{\|}{C}}-OR'$$

wherein R is hydrogen, methyl or ethyl and R′ is alkyl having from 1 to 8 carbon atoms. Illustrative of polymers derived from monomers having the aforementioned formula include, for example, poly(acrylic acid), poly(methacrylic acid),. poly(methyl methacrylate), poly(methacrylate), poly(ethacrylate), poly(ethyl acrylate), poly(butyl acrylate) and the like. The acrylonitrilic polymer, also known as acrylonitrile polymer, can be a homopolymer or copolymer derived from acrylonitrile and one or more monomers selected from the group consisting of a vinyl monomer, a conjugated diene, a 1-olefin and an acrylic compound having the formula

$$CH_2=\overset{R}{\overset{|}{C}}-\overset{O}{\overset{\|}{C}}-OR'$$

wherein R is selected from the group of hydrogen, methyl and ethyl and R′ is alkyl having from 1 to 8 atoms. Such copolymers include poly(acrylonitrile), acrylonitrile-styrene copolymer, acrylonitrile-methylacrylate copolymer, acrylonitrile-butadiene-styrene terpolymer and the like.

In another embodiment of the present invention, a method of improving the MD tear strength and other physical properties of films, preferably blown films, prepared from linear ethylene polymers is provided by adding the hereinabove-identified acrylic or acrylonitrilic polymer to said linear ethylene copolymers.

In accordance with this invention, the MD tear strength and other physical properties of ethylene polymers, particularly linear low-density polyethylene polymers (LLDPE) can be improved or, as is often desirable, the same MD tear strength can be obtained in a film of greater stiffness (Secant modulus). This is accomplished herein by blending from 1 to 10 weight percent, preferably up to 5 weight percent, and most preferably between 3 and 5 weight percent, based on the total compositon, of an amorphous acrylic or acrylonitrilic polymer with the LLDPE.

The ethylene polymers which are contemplated for use in this invention are those generally prepared by low pressure techniques. Many such polymers are commercially available. Particularly suitable are LLDPE resins which are copolymers of ethylene and higher olefins, particularly 1-butene, 1-hexene, and 1-octene. These LLDPE copolymers generally have a density of between 0.80 and 0.94 g/cc., preferably between 0.91 and 0.93 g/cc.

Preferably, the acrylic or acrylonitrilic polymer, which is blended with the LLDPE in the practice of the present invention, is selected so that its melt viscosity is less than the melt viscosity of the ethylene resin used. The disparity in viscosity appears to contribute to better Elmendorf tear strength of the blends. Also,

the best tear strength is obtained with blends in which the LLDPE itself has good tear properties. Such blends result in films with good tear and impact properties, and the higher modulus characteristic of a higher density LLDPE film.

Generally, the acrylic polymers used in the practice of the present invention are amorphous. While any acrylic polymer may be used for the purposes herein, those having a melt flow rate of 0.5 to 10 g/10 min., preferably 2 to 6 g/10 min., as determined by condition I, H-ASTM-D-1238-63T, are generally preferred.

Illustrative of acrylic polymers which are useful herein are those derived, for example, from one or more monomers having the general formula:

$$CH_2 = \overset{\displaystyle R}{\overset{|}{C}} - \overset{\displaystyle O}{\overset{\|}{C}} - OR',$$

wherein R is hydrogen, methyl or ethyl and R′ is alkyl having from 1 to 8 carbon atoms. Typical monomers within the scope of the aforementioned formula are, for example, acrylic acid, methacrylic acid and esters of acrylic acid or methacrylic acid, such as methyl acrylate, ethyl acrylate, butyl acrylate, methyl methacrylate, ethyl methacrylate, butyl methacrylate and the like. For purposes of the present invention poly(methyl methacrylate) is preferred.

Preferably, the acrylonitrilic polymer, which is blended with the LLDPE in the practice of the present invention, is selected so that its melt viscosity is less than the melt viscosity of the ethylene resin used. The disparity in viscosity appears to contribute to better Elmendorf tear strength of the blends. Also, the best tear strength is obtained with blends in which the LLDPE itself has good tear properties. Such blends result in films with good tear and impact velocities, and the higher modulus characteristic of higher density LLDPE film.

Generally, any acrylonitrilic homopolymer or copolymer may be used for the purposes herein. However, those having a melt flow rate of 1 to 15 g/10 min. are generally preferred, while those having a melt flow rate of 3 to 10 g/10 min., as measured by, for example, ASTM 1238 condition I, are most preferred. Illustrative of acrylonitrilic homopolymers and copolymers which are useful herein are those derived from acrylonitrile and acrylonitrile and one or more monomers selected from the group consisting of a vinyl monomer, such as styrene, a conjugated diene, such as 1,3-butadiene, a 1-olefin such as ethylene, 1-propylene, etc., and an acrylic compound such as acrylic acid, methacrylic acid, esters thereof, such as methyl acrylate, ethyl acrylate, butyl acrylate, methylmethacrylate, butyl-methacrylate and the like. Acrylonitrile-styrene and acrylonitrile methacrylate copolymers are especially preferred.

Compatibilizers can be used in small amounts up to 2 weight percent of the composition. Suitable compatibilizers include block copolymers of styrene-ethylene propylene-styrene (Kraton G), block copolymers of styrene and ethylene (Shelvis) and ethylene propylene copolymers (Vistalon 3707) and ethylene-methyl acrylate copolymer.

The resin blends and films are made in the conventional manner. Preferably, films are made by blown film extrusion using conventional techniques to obtain films which are generally from 0.0127 to 0.127 mm (0.5 to 5 mils) in thickness.

The following non-limiting examples are illustrative of this invention. Unless otherwise noted all parts are by weight.

## EXAMPLES 1-4

Dry blends of linear low density copolymer (LLDPE) with poly(methylmethacrylate) (Plexiglas, sold by Rohm & Haas Co.) were dry blended at the extruder hopper. Blown films having a 0.75 mil gauge were produced at 2.5:1 BUR at about 41 kg/hr. (90 lbs/hr.) output at a melt temp. of 232° C (450° F). The resultant film properties are summarized in Table I below. The films were tested using standard industrial ASTM procedures.

TABLE I

| Properties | Example 1 | Example 2 | Example 3 | Example 4 |
|---|---|---|---|---|
| | (Comparative) LLDPE* | +1% PMMA** | +3% PMMA** | +5% PMMA** |
| MD PPT Tear in (cm) | 2.2(5.5) | 2.2(5.5) | 2.0(5.1) | 1.86(4.7) |
| MD Elmendorf Tear in g/mm (g/mil) | 4015(102) | 4960(126) | 6457(164) | 5590(142) |
| MD Elongation % | 431 | 471 | 551 | 580 |
| TD Elongation % | 674 | 794 | 766 | 708 |
| MD Toughness J/cm³(ft.lb./m³) | 92.87(1123) | 114.1(1380) | 115.6(1398) | 116.4(1408) |
| TD Toughness J/cm³(ft.lb./m³) | 86.17(1042) | 122.5(1481) | 106.2(1284) | 110.1(1331) |
| MD 1% Secant Modulus kPa(psi) | 224.5(35467) | 242.5(35175) | 228.9(41909) | 305.6(44319) |

*Ethylene-hexene copolymer having a density of 0.921 and a melt index of 0.75.
**Plexiglas VS (poly(methylmethacrylate)) commercially available from Rohm & Haas.
PPT = puncture propogation tear
TD = transverse direction
MD = machine direction

The physical properties identified in Table I demonstrate the improvement in LLDPE film strength by adding 1, 3 and 5% acrylic polymer to the LLDPE.

Examples 5-8

Dry blends of linear low density copolymer (LLDPE) with styrene-acrylonitrile copolymer or acrylonitrile-methylacrylate copolymer were dry blended at the extruder hopper. Blown films having a 0.75 mil gauge were produced in a conventional manner at 2.5:1 Blowup Ratio (BUR), at about 41 kg/hr (90 lbs/hr) output at a melt temp. of 232° C (450 °F). The films were tested using standard industrial ASTM procedures. The resultant film properties are summarized in Table II below.

TABLE II

| Properties | Example 5 | Example 6 | Example 7 | Example 8 |
|---|---|---|---|---|
| | (Comparative) LLDPE* | +1% BAREX 210** | +3% BAREX 210** | +1% TYRIL 1000*** |
| MD PPT Tear (cm) | 4.96(1.95) | 4.38(1.73)[12] | 4.68(1.84)[6] | 4.53(1.78)[9] |
| MD Elmendorf Tear in g/mm (g/mil) | 5944(151) | 9370(238)[58] | 7755(197)[30] | 7559(192)[27] |
| TEDD J/cm (in-lbs/mil) | 974(21.9) | 1045(23.5)[7] | 1272(28.6)[31] | 1041(23.4)[7] |
| MD Elongation % | 432 | 526[22] | 552[28] | 502[16] |
| MD Toughness J/cm³(ft.lb./m³) | 90.07(1088) | 102.5(1238)[14] | 117.3(1417)[30] | 99.26(1199)[16] |
| TD Toughness J/cm³(ft.lb./m³) | 86.17(1042) | 122.5(1481) | 106.2(1284) | 110.1(1331) |
| [] Represents % improvement versus LLDPE control film | | | | |

*ethylene-oxtene copolymer having a density of 0.922 and a melt index of 0.9.
**acrylonitrile-methylacrylate copolymer, melt flow rate 3-12 g/10 min., available from SOHIO
***anrylonitrile-styrene copolymer, melt flow rate 9.5 g/10 min., available from Dow Chemical Co.
PPT = puncture propogation tear
TEDD = total energy dart drop
TD = transverse direction
MD = machine direction

Although the present invention has been described with preferred embodiments, it is to be understood that modifications and variations may be resorted to, without departing from the spirit and scope of this

invention, as those skilled in the art will readily understand. Such modifications and variations are considered to be within the purview and scope of the appended claims.

## Claims

1. A film comprising:

(i) from about 90 to about 99 weight percent of a low density linear ethylene copolymer of ethylene and a higher olefin; and

(ii) from about 1 to about 10 percent by weight of the total composition, of an acrylic or acrylonitrilic polymer.

2. The film of claim 1 wherein said polymer is an acrylic polymer which is a homopolymer or a copolymer derived from one or more monomers having the general formula:

$$CH_2 = \overset{\displaystyle R}{\overset{|}{C}} - \overset{\displaystyle O}{\overset{\|}{C}} - OR',$$

wherein R is selected from the group consisting of hydrogen, methyl and ethyl and R′ is alkyl having from 1 to 8 carbon atoms.

3. The film of any one of the preceding claims wherein said acrylic polymer is selected from the group consisting of poly(acrylic acid), poly(methacrylic acid), poly(methyl methacrylate), poly(methyl acrylate), poly(ethyl acrylate) and mixtures thereof.

4. The film of Claim 1 wherein said polymer is an acrylonitrilic polymer which is a homopolymer or a copolymer derived from acrylonitrile and one or more monomers selected from the group consisting of a vinyl monomer, a conjugated diene, a 1-olefin and an acrylic compound having the formula

$$CH_2 = \overset{\displaystyle R}{\overset{|}{C}} - \overset{\displaystyle O}{\overset{\|}{C}} - OR'$$

wherein R is selected from the group consisting of hydrogen, methyl and ethyl and R′ is alkyl from 1 to 8 carbon atoms.

5. The film of any one of the preceding claims wherein said acrylonitrile copolymer is styrene-acrylonitrile or acrylonitrile-methylacrylate.

6. The film of any one of the preceding claims wherein said low density linear ethylene copolymer is a copolymer of ethylene and a higher olefin having 4 to 8 carbon atoms having a density of less than 0.94 g/cc.

7. The film of any one of the preceding claims wherein said low density linear ethylene copolymer is a copolymer of ethylene and 1-hexene, having a density of less than about 0.94 g/cc.

8. The film of any one of the preceding claims wherein said film is a blown film.

9. A method of improving the physical properties of a film prepared from a low density linear ethylene copolymer of ethylene and higher olefin, said method comprising blending with said low density linear ethylene copolymer of ethylene and higher olefin from 1 to 10 weight percent, based on the total composition, of an acrylic or acrylonitrilic polymer.

10. The method of Claim 9 wherein said polymer is an acrylonitrilic polymer.